# EUROPEAN PATENT APPLICATION

(11) **EP 0 921 017 A1**
(43) Date of publication of application: **09.06.1999**
(21) Application number: 97830494.7
(22) Date of filing: 03.10.1997
(51) Int. Cl.: B60B 11/06

(54) **A device for fixing double wheels to a hub**

(71) Applicant: OMCI S.p.A. OFFICINE METALMECCANICHE COSTRUZIONI INDUSTRIALI, 41013 Castelfranco Emilia (Modena) (IT)
(72) Inventor: Magni, Giorgio, 41100 Modena (MO) (IT)
(74) Representative: Gotra, Stefano

(57) **Abstract**

The invention concerns a device for mounting double wheels to a hub, the device being destined to operate between the hub and a rim of an external wheel of the double wheels. The device comprises a plurality of segment-shaped elements (3) which are arranged in a circumferential crown distribution between the hub (1) and the rim (20) of the eexternal wheeel (2). Guide means enable a slide coupling to be achieved between each of the plurality of segment-shaped elements (3) and the hub (1) in a parallel direction to an axis of the double wheels.

## Description

The invention relates to a device for fixing double wheels to a hub.

Double, or twin wheels, are usually fixed to the hubs of heavy vehicles requiring powerful torque by means of elastic rings inserted between the hub and the rim of the external wheel. These rings are split and block the rim to the hub by means of a conical coupling; they are radially slim and small with respect to their diameter, and for this reason are difficult and expensive to manufacture.

In use, too, they present considerable problems. As they are heavy, they are difficult to handle; they are especially problematic during the dismounting operation, since for various reasons they tend to get blocked between the hub and the rim.

The main aim of the present invention is to obviate the limitations and serious drawbacks inherent in the prior art.

In particular, the present invention proposes to make the double-wheel mounting and especially the dismounting operation on and off the hub easy and less laborious. These hubs, it will be remembered, are large in relation to the rims, because they internally house the gear reducer needed to achieve the necessarily powerful torque transmission.

The invention further proposes to create a device for fixing double wheels to hubs which is economical and easily-manufactured.

An advantage of the present invention is that it improves torque transmission between the hub and wheels.

The above aims and advantages and others besides are all achieved by the present invention as it is characterised in the appended claims.

Further characteristics and advantages of the present invention will better emerge from the detailed description that follows of some preferred but non-exclusive embodiments of the invention, illustrated purely by way of non-limiting example in the accompanying figures of the drawings, in which:
figure 1 is a partial axial section of a hub of a wheel in which wheel attachment is realised by means of the device of the invention;
figure 2 is an enlarged scale view of a part of figure 1;
figure 3 is a schematic perspective view of a segment-shaped element which is part of a first embodiment of the invention;
figure 3a is a schematic transversal section of figure 3;
figure 4 is a schematic perspective view of a segment-shaped element which is part of a second embodiment of the invention;
figure 4a is a schematic transversal section of figure 4;
figure 5 is a schematic perspective view of a segment-shaped element which is part of a further embodiment of the invention;
figure 5a is a schematic transversal section of figure 5.

With reference to the figures, 1 denotes the hub of a drive axle of a heavy vehicle on which two double wheels 2 are coupled, said wheels being predisposed for transmitting powerful couples. The two wheels 2 are located symmetrically with respect to a median plane which is perpendicular to the rotation axis and are provided with two equal rims 20.

The internal of the double wheels 2 is coupled by means of a special internal conical surface 21 to a corresponding external conical surface 1a of the hub 1 and is axially pressed against the hub 1 by a spacer 6. In turn the spacer 6 is pressed against the rim 20 of the internal wheel 2 by the rim 20 of the external of the double wheels. The external wheel is constrained to the hub by means of a plurality of segment-shaped elements 3'' located circumferentially crown-fashion between the hub and the rim of said external wheel 2.

The elements 3'' are identical and uniformly distributed and spaced on the hub 1. Each of them has a straight-axis projection 30 which is predisposed to engage, axially slidably, in one of a plurality of splines 10 made equidistantly on the external cylindrical surface of the hub 1. Each element 3'' exhibits an "internal" end predispposed to interact with the hub 1, which is for this purpose provided with an external portion of truncoconical section 33. This section 33 is of dimensions and conformation such as to couple with the internal conical surface 21 of the rim 20.

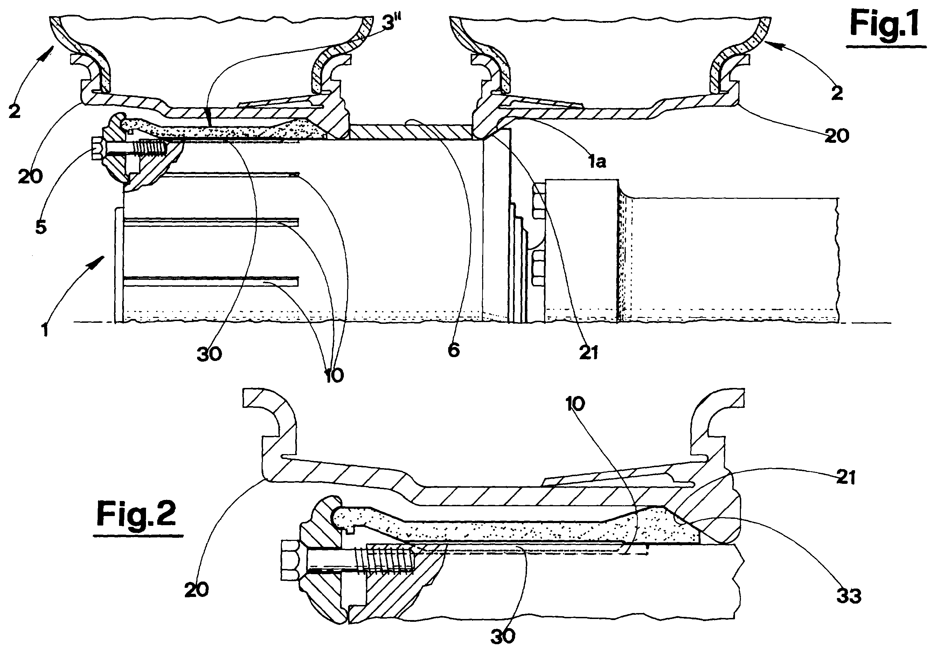

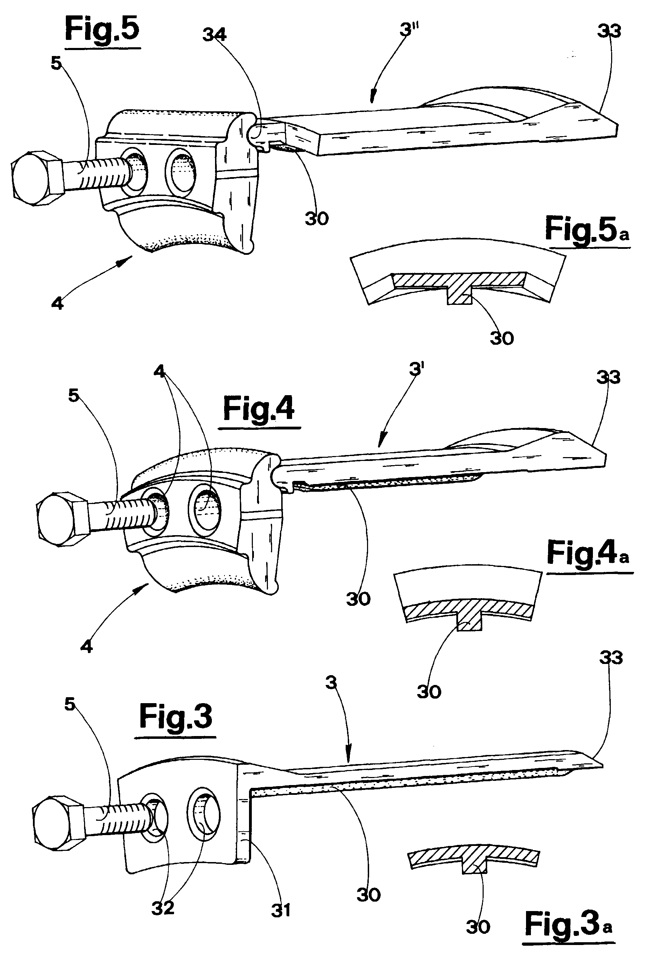

In a first embodiment, illustrated in detail in figures 3 and 3a and not corresponding to the embodiment of figures 1 and 2, the "external" end of said truncoconical surface 33 is solidly constrained to a projecting appendix 31 affording two through holes 32 having parallel axes and being symmetrically arranged with respect to said projection 30.

Each through hole 32 houses (with a predetermined play) a part of the cylindrical body of a fixing screw 5 by means of whch the whole element 3 is removably solidly constrained to the hub 1. The various organs which are axially assembled, i.e. the hub 1, the rims 20, the spacer 6 and the elements 3 are dimensioned so that due to the action of the screws 5 each element 3 can be brought to exercise a predetermined axial force directly on the rim 20 of the external wheel 2.

In a second embodiment, illustrated in detail in figures 4 and 4a, the external end of each said element 3', that is, its end opposite to the internal end which is predisposed to interact between said hub 1 and the rim 20, is dimensioned and conformed such as to function as a rest for a fixture bracket 4 frontally connectable to the hub 1 by means of screws 5. For this purpose the bracket 4 is provided with two through holes 41 located in an intermediate position between the two rest points of the bracket 4, each of which has the task of housing, with a predetermined play, a part of the cylindrical body of the fixing screw 5 which functions as a stay. In this case, too, the various axially-assembled organs, that is, the hub 1, the rims 20, the spacer and the elements 3', are dimensioned so that, due to the action of the screws 5' each element 3' can be brought to extert a predetermined axial force directly on the rime of the external wheel 2.

A third embodiment, illustrated in detail in figures 5 and 5a and corresponding to the embodiment illustrated in figures 1 and 2, is an improvement on the second embodiment as described above, and is characterised in that it includes elements 3'' wherein the "external" end, opposite to the "internal" end predisposed to interact between the hub 1 and the rim 20, comprises a head 34 which is specially conformed to enable, in the coupling with the corresponding end of the bracket 4, a constraint to be achieved which all the same allows complete freedom of oscillation in a plane containing the axis of the hub 1. The head 34 is shaped as a part of a convex cylindrical surface destined to come into contact with a corresponding portion of concave cylindrical surface arranged at an end of said bracket 4. This embodiment enables a maximum contact surface between the head 34 and the bracket at all times, independently of the relative position between the two organs.

From a constructional point of view the invention has the advantage of being simple and economical to manufacture. Each of elements 3, 3' and 3'' can be made in a single piece and can easily be produced in the finished state, by means of a pressing operation.

In functional terms the invention exhibits, among other things, the advantage of enhancing transmission of torque from the hub to the wheels thanks to the creation of a positive slide couple between the projections 30 of the elements 3, 3' and 3'' and the corresponding splines 10 in the hub 1.

## Claims

1. A device for mounting double wheels to a hub, destined to operate between the hub and a rim of an external wheel of the double wheels, comprising a plurality of segment-shaped elements (3, 3', 3'') destined to be located and circumferentially distributed in a crown arrangement between the hub (1) and the rim (20) of the external wheel; guide means being provided for enabling a sliding couple between each of said plurality of segment-shaped elements (3, 3', 3'') and said hub (1), said sliding couple being in a parallel direction to an axis of said double wheels.

2. The device of claim 1, characterised in that said guide means comprise at least one straight-axis projection (30) on each of said plurality of segment-shaped elements (3, 3', 3'') predisposed to engage in a corresponding spline (10) made on said hub (1).

3. The device of claim 2, characterised in that each of said plurality of elements (3) has, solidly fixed to an end thereof which end is opposite to another end destined to interact between the hub (1) and the rim (20), a projecting appendix (31) affording at least one through hole (32) having an axis which is parallel to an axis of said straight-axis projection (30) and which is predisposed to house, with a predetermined extent of play, a part of a cylindrical body of a screw (5), said screw (5) being a means for constraining said element (3) to said hub (1).

4. The device of claim 2, characterised in that each of said plurality of elements (3') exhibits an end, opposite to another end destined to interact between the hub (1) and the rim (20), which is of dimensions and conformation such as to function as a rest for a fixture bracket (4) frontally connectable to the hub (1) by means of at least one screw (5).

5. The device of claim 4, characterised in that said bracket (4) is frontally connectable to the hub (1) by means of the screw (5), which screw (5) functions as a stay and is located at an intermediate position between two rest points of the bracket (4).

6. The device of claim 4 or 5, characterised in that each of said plurality of elements (3'') exhibits at one end thereof a head (34) having a portion of convex cylindrical surface, which surface is destined to contact with a corresponding portion of concave cylindrical surface predisposed at an end of said bracket (4).

7. The device of any one of the preceding claims, characterised in that said plurality of segment-shaped elements (3, 3', 3'') are identical.

8. The device of any one of the preceding claims, characterised in that each of said plurality of segment-shaped elements (3, 3', 3'') is made in a single piece.

9. The device of any one of the preceding claims, characterised in that each of said plurality of segment-shaped elements (3, 3', 3'') is manufactured by press-forming.
